Europäisches Patentamt

European Patent Office

Office européen des brevets

(19)

(11) **EP 0 702 804 B1**

(12) **FASCICULE DE BREVET EUROPEEN**

(45) Date de publication et mention
de la délivrance du brevet:
**20.06.2001 Bulletin 2001/25**

(21) Numéro de dépôt: **95914431.2**

(22) Date de dépôt: **28.03.1995**

(51) Int Cl.[7]: **G02F 2/02**, G02F 1/225

(86) Numéro de dépôt international:
**PCT/FR95/00386**

(87) Numéro de publication internationale:
**WO 95/27921 (19.10.1995 Gazette 1995/45)**

(54) **DISPOSITIF D'AMPLIFICATION DE TAUX DE MODULATION D'AMPLITUDE D'UN FAISCEAU OPTIQUE**

GERÄT ZUR VERSTÄRKUNG DER MODULATIONSAMPLITUDE EINES OPTISCHEN STRAHLS

OPTICAL BEAM AMPLITUDE MODULATION RATE AMPLIFICATION DEVICE

(84) Etats contractants désignés:
**DE GB**

(30) Priorité: **08.04.1994 FR 9404167**

(43) Date de publication de la demande:
**27.03.1996 Bulletin 1996/13**

(73) Titulaire: **THOMSON-CSF**
**75008 Paris (FR)**

(72) Inventeurs:
• **PAPUCHON, Michel**
**F-92402 Courbevoie Cédex (FR)**
• **VODJDANI, Nakita**
**F-92402 Courbevoie Cédex (FR)**
• **DELACOURT, Dominique**
**F-92402 Courbevoie Cédex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**WO-A-92/13291**

• **JOURNAL OF LIGHTWAVE TECHNOLOGY,
vol.9, no.11, Novembre 1991, NEW YORK US
pages 1523 - 1527 K.MATSUMOTO ET AL.
'MICROWAVE PHASE SHIFTER USING OPTICAL
WAVEGUIDE STRUCTURE'**
• **APPLIED OPTICS, vol.32, no.33, 20 Novembre
1993, NEW YORK US pages 6718 - 6726
K.SHIMIZU ET AL. 'FREQUENCY TRANSLATION
OF LIGHT WAVES BY PROPAGATION AROUND
AN OPTICAL RING CIRCUIT CONTAINING A
FREQUENCY SHIFTER: I.EXPERIMENT'**

**Description**

Le domaine de l'invention est celui des systèmes optiques nécessitant de la modulation d'amplitude et notamment à des cadences hyperfréquences.

Actuellement, l'un des problèmes souvent rencontré est celui du rapport entre la puissance électrique PE, utilisée pour effectuer la modulation d'amplitude et la puissance électrique PS fournie par un photodétecteur capable de détecter l'onde optique modulée. Cet aspect est particulièrement important dans le domaine des hyperfréquences et de plus dans ce cas, le signal de modulation est du type analogique ce qui conduit à effectuer une modulation avec un taux de modulation inférieur à 1, pour préserver la qualité du signal. La puissance générée par le photodétecteur est alors relativement faible.

Classiquement, on peut employer un amplificateur optique avant détection par un photodétecteur, pour augmenter le signal optique. Il est également possible d'utiliser une source laser de forte puissance et un modulateur externe.

Ces techniques permettent d'augmenter le signal optique utile sans pour cela augmenter la puissance hyperfréquence nécessaire pour le générer.

Cependant l'amplificateur optique et le photodétecteur risquent fortement de saturer en recevant non seulement la puissance optique modulée mais également le fond continu résultant d'un taux de modulation inférieur à 1. La puissance optique n'est pas judicieusement utilisée puisqu'elle est présente non seulement sur le signal important (signal modulé) mais aussi sur un fond continu inutile pour l'application.

Il existe actuellement des dispositifs monofréquence pour la modulation d'onde optique utilisant des dispositifs interférométrique à deux bras, notamment décrits dans l'article : JOURNAL OF LIGHTWAVE TECHNOLOGY, vol. 9, n° 11, November 1991, NEW YORK US pages 1523-1527 K. MATSUMOTO ET AL. 'MICROWAVE PHASE SHIFTER USING OPTICAL WAVEGUIDE STRUCTURE'.

Néanmoins le problème du fond continu inutile n'est pas résolu.

Pour résoudre ce problème de limitation de taux de modulation dû à la présence d'un fond continu, la présente invention propose un dispositif d'amplification de taux de modulation d'amplitude d'un faisceau optique capable d'éliminer le fond continu présent dans un signal modulé. Pour cela, le dispositif selon l'invention comprend des moyens permettant de faire interférer deux ondes optiques de même amplitude à des fréquences décalées et par là-même d'obtenir une onde optique purement sinusoïdale sans fond continu.

Plus précisément, la présente invention a pour objet un dispositif d'amplification de taux de modulation d'une onde optique incidente monofréquence, de fréquence FL comprenant un amplificateur optique AO, comprenant entre l'onde incidente et l'amplificateur :

- un dispositif interférométrique à deux bras $B_1$ et $B_2$, chaque bras recevant une partie de l'onde incidente, l'un des bras étant également alimenté par un dispositif électrique capable de créer une onde hyperfréquence à la fréquence FM au sein dudit bras,
- ce dispositif interférométrique comprenant des moyens pour générer en sortie des deux bras, deux ondes optiques de même amplitude, décalées en fréquence, caractérisé en ce que :

  - le bras $B_1$ comporte un translateur de fréquence Tf, commandé par une onde hyperfréquence à la fréquence FM et fournissant en sortie une onde optique à la fréquence FL et une onde optique à la fréquence FM + FL, respectivement d'amplitude $a_1(FL)$ et $a'_1(FM + FL)$,
  - le bras B2 comportant un déphaseur continu $D_\phi$ procurant en sortie une onde optique à la fréquence FL d'amplitude $a_2(FL)$ telle, que recombinée en sortie du dispositif interférométrique, à l'onde optique d'amplitude $a_1(FL)$ il en résulte une onde optique d'amplitude $a'_1(FL)$.

Le dispositif d'amplification de taux de modulation selon l'invention peut également comprendre un interféromètre type Mach Zehnder, chacun des bras comportant un déphaseur, un déphaseur étant continu et créant un déphasage de π, l'autre déphaseur créant un déphasage sinusoïdal avec une fréquence hyper. En sortie du dispositif interférométrique, il y a principalement interférences entre deux ondes optiques de même amplitude à des fréquences respectivement FL - FM et FL + FM.

L'invention a encore pour objet un dispositif d'amplification de taux de modulation dans lequel le dispositif interférométrique est un microinterféromètre de Sagnac dans lequel on introduit un déphaseur hyperfréquence. En sortie de ce dispositif interférométrique on parvient également à faire interférer deux ondes optiques de même amplitude décalées d'une fréquence 2FM, si le déphaseur est alimenté à la fréquence FM.

L'invention sera mieux comprise et d'autres avantages apparaîtront à la lecture de la description qui va suivre, donnée à titre non limitatif et grâce aux figures annexées parmi lesquelles :

- la figure 1 illustre un exemple de dispositif selon l'invention utilisant un translateur de fréquence Tf;
- la figure 2 illustre un autre exemple de dispositif selon l'invention utilisant un interféromètre avec deux déphaseurs, un continu et un alimenté en hyperfréquence ;
- la figure 3 illustre un troisième exemple de dispositif selon l'invention comprenant un microinterféromètre de Sagnac.

D'une manière générale, le dispositif selon l'invention doit assurer l'interférence de deux ondes décalées d'une fréquence en hyperfréquence, de même amplitude pour fournir un signal optique modulé en hyperfréquence et ne présentant pas de fond continu, ce signal pouvant alors avantageusement être amplifié optiquement puis détecté par un photodétecteur.

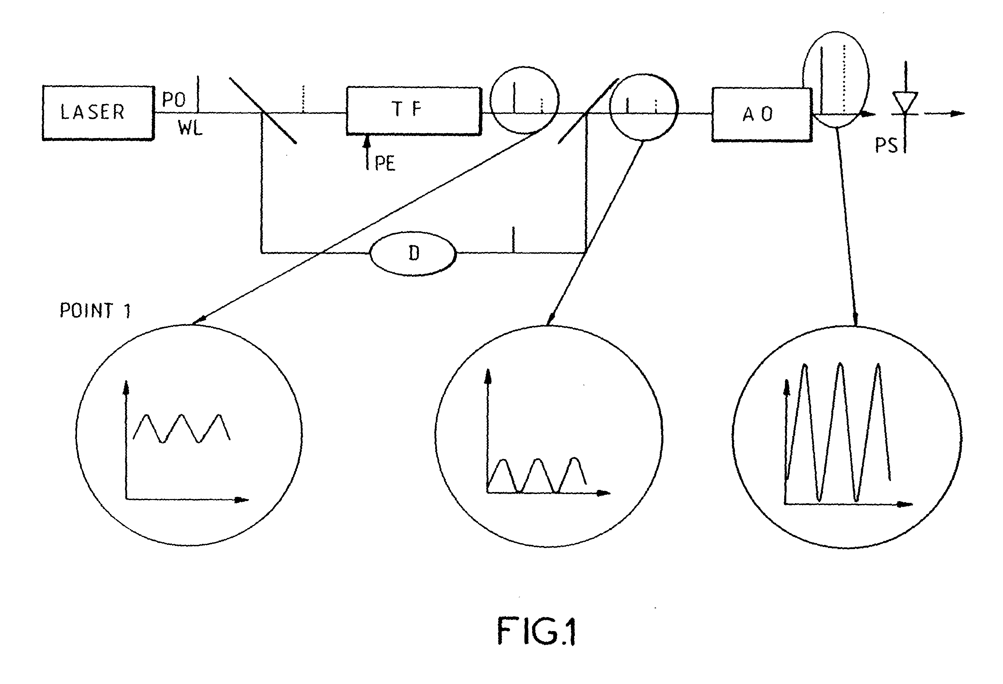

Ainsi une première configuration utilise un dispositif interférométrique comprenant d'une part un translateur de fréquence, d'autre part un déphaseur ; le principe général d'une telle configuration sera mieux compris en considérant le schéma général de la figure 1. Une source laser émettant en continu et supposée monofréquence et émettant une puissance optique PO est couplée dans un dispositif interférométrique à deux ondes. Dans un premier bras $B_1$, on dispose un translateur de fréquence Tf alimenté par une puissance hyperfréquence PE. Ce translateur de fréquence génère à partir d'une onde optique incidente à la fréquence FL, une onde à la fréquence FL + FM et une onde à la fréquence FL (FM étant la fréquence de l'onde hyperfréquence provenant d'un générateur délivrant la puissance PE).

Le rapport entre l'onde translatée de fréquence FL + FM et l'onde non translatée FL, dépend de l'amplitude du signal hyperfréquence appliqué. Dans la mesure où l'on cherche à réduire la puissance PE, ce rapport est nécessairement faible. C'est pourquoi dans le second bras $B_2$, on dispose un déphaseur $D_\phi$, fonctionnant en continu dont la valeur est ajustée pour que, après recombinaison des deux bras, les deux ondes à FL et FL + FM aient la même amplitude. Le signal optique bifréquence passe ensuite dans un amplificateur optique AO, de gain G, avant d'être envoyé sur le photodétecteur qui analyse finalement le battement entre les deux ondes de fréquences différentes, pour fournir un signal à la fréquence FM.

Dans ce dispositif, on voit que si un photodétecteur était placé juste après le translateur de fréquence (point 1), le signal détecté se composerait non seulement d'une composante à la fréquence FM résultant du battement des deux ondes optiques de fréquences différentes mais également du fond continu dû au fait que les deux ondes ne sont pas de même amplitude. L'action de l'interféromètre utilisant un translateur de fréquence et un déphaseur est donc de supprimer le fond continu et de ne laisser subsister que le battement entre le signal de battement entre deux ondes de même amplitude et donc avec un contraste de 1.

L'amplificateur optique AO n'amplifie ainsi que le signal optique utile et le photodétecteur ne risque pas d'être limité par le fond continu. On peut ainsi profiter de toute la puissance de sortie maximale de l'amplificateur optique acceptable par le photodétecteur.

Le translateur Tf du bras $B_1$ peut avantageusement être un dispositif acoustooptique type déflecteur acoustooptique alimenté en hyperfréquence. Ce déflecteur acoustooptique peut comprendre un transducteur piézoélectrique capable de générer une onde acoustique qui en créant une structure réseau d'indice va décaler en fréquence une onde optique incidente à la fréquence FL, d'une différence en fréquence de FM.

Le translateur Tf peut également être un dispositif électrooptique. On génère par l'intermédiaire d'électrodes un champ électrique qui va initier la propagation d'une onde hyperfréquence.

Ce déphaseur $D_{\phi O}$ peut typiquement être constitué d'un guide compris entre deux électrodes de manière à appliquer un champ électrique continu, influençant l'indice optique et donc le chemin optique de l'onde incidente de manière à obtenir le déphasage désiré.

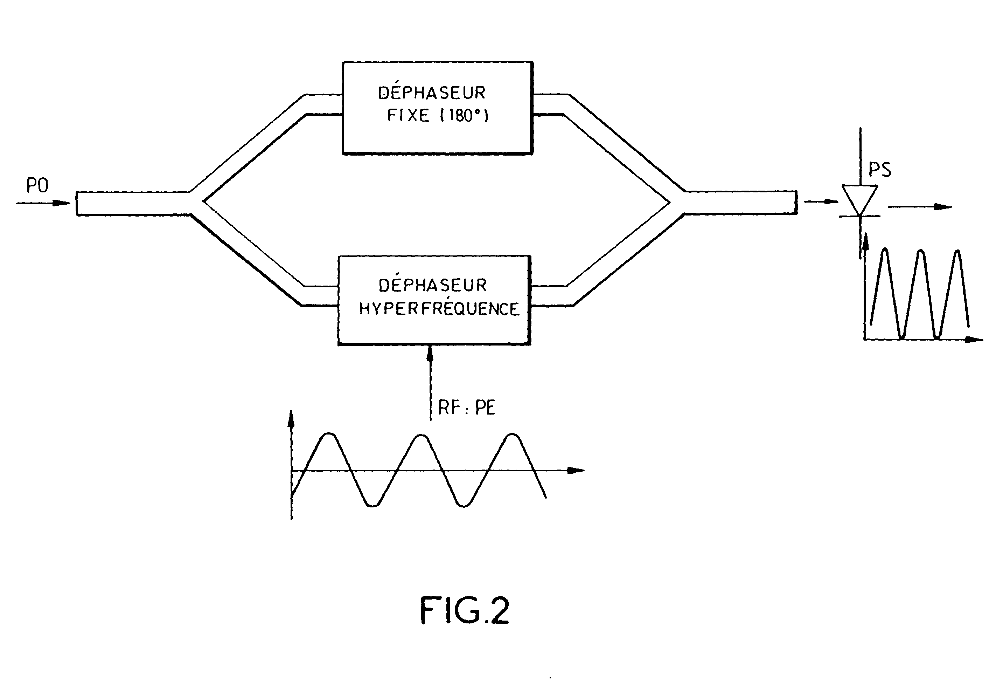

Dans une autre variante de l'invention, le dispositif interférométrique peut avantageusement comprendre deux déphaseurs, comme l'illustre la figure 2. Dans un bras $B_1$, un premier déphaseur $D_\pi$ induit un déphasage d'une valeur de $\pi$ sur l'onde optique incidente. Dans le bras $B_2$, on peut introduire un déphaseur $D_{FM}$, alimenté électriquement à la fréquence FM/2. Dans le bras $B_2$, on génère alors une série d'ondes optiques à des fréquences FL $\pm$ FM/2; FL $\pm 3 \frac{FM}{2}$,... avec principalement deux composantes prépondérantes FL $+ \frac{FM}{2}$ et FL $- \frac{FM}{2}$. En sortie du dispositif interférométrique, on obtient des interférences principalement entre des ondes hyperfréquences à des fréquences + FM/2 et - FM/2 et donc bien une onde optique bifréquence avec des amplitudes égales pour les deux composantes et sans fond continu après battement.

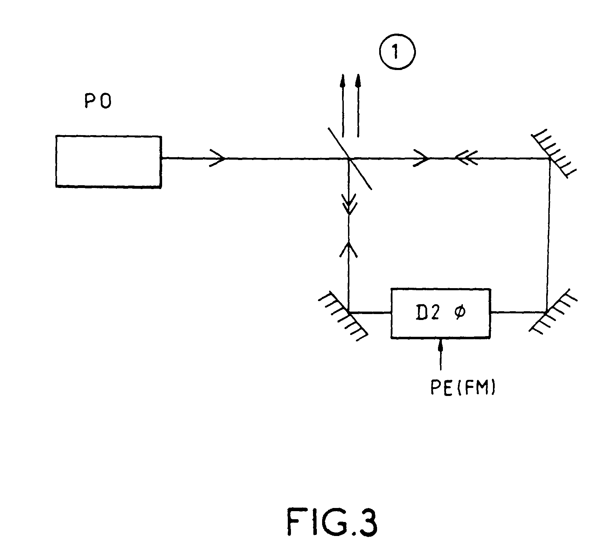

Une troisième configuration de dispositif interférométrique, utilisé dans le dispositif selon l'invention est un microinterféromètre de Sagnac tel que représenté à la figure 3. A partir d'une source laser monofréquence, on peut réaliser ce type d'interféromètre avec une lame séparatrice et des miroirs semi-réfléchissants. L'onde optique à la fréquence FL est divisée par une lame séparatrice en deux ondes qui se propagent en sens opposés le long d'un chemin fermé défini par des miroirs. Ces deux ondes contra-propagatives se recombinent et produisent des franges d'interférences pouvant être détectées par un photodétecteur placé au point 1. Lorsqu'aucun effet non réciproque n'est introduit dans le chemin fermé, les deux ondes contra-propagatives arrivent en opposition de phase au point 1. En introduisant un déphaseur variant sinusoïdalement dans le temps, dans le circuit fermé, on peut créer un déphasage différentiel entre les deux ondes contra-propagatives et ainsi réaliser de la modulation d'amplitude à partir d'un niveau zéro. Dans un tel dispositif interférométrique, le fonctionnement est donc équivalent à celui d'un interféromètre de Mach Zehnder polarisé à 180° mais sans avoir à appliquer une tension pour créer ce déphasage de $\pi$. Ainsi, pour une cadence de déphasage de FM/2, on obtient principalement un signal de battement à la fréquence FM.

## Revendications

1. Dispositif d'amplification de taux de modulation d'une onde optique incidente monofréquence, de fréquence FL comprenant un amplificateur optique AO, comprenant entre l'onde incidente et l'amplificateur :

- un dispositif interférométrique à deux bras $B_1$ et $B_2$, chaque bras recevant une partie de l'onde incidente, l'un des bras étant également alimenté par un dispositif électrique capable de créer une onde hyperfréquence à la fréquence FM au sein dudit bras,

- ce dispositif interférométrique comprenant des moyens pour générer en sortie des deux bras, deux ondes optiques de même amplitude, décalées en fréquence caractérisé en ce que :

    - le bras $B_1$ comporte un translateur de fréquence Tf, commandé par une onde hyperfréquence à la fréquence FM et fournissant en sortie une onde optique à la fréquence FL et une onde optique à la fréquence FM + FL, respectivement d'amplitude $a_1(FL)$ et $a'_1(FM + FL)$,

    - le bras $B_2$ comporte un déphaseur continu $D_\phi$ procurant en sortie une onde optique à la fréquence FL d'amplitude $a_2(FL)$ telle, que recombinée en sortie du dispositif interférométrique, à l'onde optique d'amplitude $a_1(FL)$ il en résulte une onde optique d'amplitude $a'_1(FL)$.

2. Dispositif d'amplification de taux de modulation selon la revendication 1, caractérisé en ce que le translateur de fréquence est un dispositif acoustooptique.

3. Dispositif d'amplification de taux de modulation selon la revendication 1, caractérisé en ce que le translateur de fréquence est un dispositif électrooptique.

4. Dispositif d'amplification de taux de modulation selon la revendication 2, caractérisé en ce que le translateur de fréquence est un déflecteur acoustooptique.

5. Dispositif d'amplification de taux de modulation d'une onde optique incidente monofréquence, de fréquence FL comprenant un amplificateur optique AO, comprenant entre l'onde incidente et l'amplificateur :

- un dispositif interférométrique à deux bras $B_1$ et $B_2$, chaque bras recevant une partie de l'onde incidente, l'un des bras étant également alimenté par un dispositif électrique capable de créer une onde hyperfréquence à la fréquence FM au sein dudit bras,

- ce dispositif interférométrique comprenant des moyens pour générer en sortie des deux bras, deux ondes optiques de même amplitude, décalées en fréquence, caractérisé en ce que le bras $B_1$ comprend un déphaseur fixe de $\pi$, le bras $B_2$ comprenant un déphaseur alimenté en hyperfréquence.

6. Dispositif d'amplification de taux de modulation d'une onde optique incidente monofréquence, de fréquence FL comprenant un amplificateur optique AO, comprenant entre l'onde incidente et l'amplificateur :

- un dispositif interférométrique à deux bras $B_1$ et $B_2$, chaque bras recevant une partie de l'onde incidente, l'un des bras étant également alimenté par un dispositif électrique capable de créer une onde hyperfréquence à la fréquence FM au sein dudit bras,

- ce dispositif interférométrique comprenant des moyens pour générer en sortie des deux bras, deux ondes optiques de même amplitude, décalées en fréquence, caractérisé en ce que le dispositif interférométrique est un microinterféromètre de Sagnac comprenant un déphaseur alimenté en hyperfréquence $D_{2\phi}$.

## Claims

1. Device for amplification of modulation ratio of a single-frequency incident optical wave, of frequency FL, comprising an optical amplifier AO, comprising, between the incident wave and the amplifier:

- an interferometric device with two arms $B_1$ and $B_2$, each arm receiving a part of the incident wave, one of the arms also being fed by an electrical device capable of creating a UHF wave at the frequency FM within the said arm,

- this interferometric device comprising means for generating, at the output of the two arms, two optical waves of the same amplitude, offset in frequency, characterized in that:

    - the arm $B_1$ includes a frequency converter Tf, controlled by a UHF wave at the frequency FM, and supplying, as output, an optical wave at the frequency FL and an optical wave at the frequency FM + FL, respectively of amplitude $a_1(FL)$ and $a'_1(FM + FL)$,

    - the arm $B_2$ includes a continuous phase shifter $D_\phi$, giving rise, as output, to an optical wave at the frequency FL of amplitude $a_2(FL)$ such that, recombined at the output of the interferometric device, with the opti-

cal wave of amplitude $a_1(FL)$, an optical wave of amplitude $a'_1(FL)$ results therefrom.

**2.** Modulation ratio amplification device according to Claim 1, characterized in that the frequency converter is an acoustooptical device.

**3.** Modulation ratio amplification device according to Claim 2, characterized in that the frequency converter is an electrooptical device.

**4.** Modulation ratio amplification device according to Claim 2, characterized in that the frequency converter is an acoustooptical deflector.

**5.** Device for amplification of modulation ratio of a single-frequency incident optical wave, of frequency FL, comprising an optical amplifier AO, comprising, between the incident wave and the amplifier:

- an interferometric device with two arms $B_1$ and $B_2$, each arm receiving a part of the incident wave, one of the arms also being fed by an electrical device capable of creating a UHF wave at the frequency FM within the said arm,
- this interferometric device comprising means for generating, at the output of the two arms, two optical waves of the same amplitude, offset in frequency, characterized in that the arm $B_1$ comprises a fixed $\pi$ phase shifter, the arm $P_2$, comprising a phase shifter fed with UHF.

**6.** Device for amplification of modulation ratio of a single-frequency incident optical wave, of frequency FL, comprising an optical amplifier AO, comprising, between the incident wave and the amplifier:

- an interferometric device with two arms $B_1$ and $B_2$, each arm receiving a part of the incident wave, one of the arms also being fed by an electrical device capable of creating a UHF wave at the frequency FM within the said arm,
- this interferometric device comprising means for generating, at the output of the two arms, two optical waves of the same amplitude, offset in frequency, characterized in interferometric device is a Sagnac microinterferometer comprising a phase shifter fed with UHF $D_{2\phi}$.

**Patentansprüche**

**1.** Vorrichtung zur Verstärkung des Modulationsgrads einer ankommenden monochromatischen Lichtwelle der Frequenz FL, wobei die Vorrichtung einen optischen Verstärker AO besitzt sowie zwischen dem Eingang für die ankommende Welle und dem Verstärker eine interferometrische Vorrichtung mit zwei Armen $B_1$ und $B_2$ aufweist, die je einen Teil der ankommenden Welle empfangen und von denen der eine auch durch eine elektrische Vorrichtung gespeist wird, die eine Hyperfrequenzwelle der Frequenz FM in diesem Arm erzeugen kann,

- wobei diese interferometrische Vorrichtung Mittel zur Erzeugung zweier Lichtwellen gleicher Amplitude, aber unterschiedlicher Frequenzen am Ausgang der beiden Arme besitzt, dadurch gekennzeichnet, daß
- der Arm $B_1$ einen Frequenzumsetzer $T_f$ enthält, der von einer Hyperfrequenzwelle der Frequenz FM gesteuert wird und am Ausgang eine Lichtwelle der Frequenz FL und eine Lichtwelle der Frequenz FM+FL und einer Amplitude $a_1$ (FL) beziehungsweise $a'_1$(FM+FL) liefert,
- der Arm $B_2$ einen konstanten Phasenschieber $D_\phi$ enthält, der am Ausgang eine Lichtwelle mit der Frequenz FL und einer Amplitude $a_2(FL)$ liefert, sodaß sich nach einer Wiedervereinigung mit der Lichtwelle der Amplitude $a_1(FL)$ am Ausgang der interferometrischen Vorrichtung eine Lichtwelle der Amplitude $a'_1(FL)$ ergibt.

**2.** Vorrichtung zur Verstärkung des Modulationsgrads nach Anspruch 1, dadurch gekennzeichnet, daß der Frequenzumsetzer eine akusto-optische Vorrichtung ist.

**3.** Vorrichtung zur Verstärkung des Modulationsgrads nach Anspruch 1, dadurch gekennzeichnet, daß der Frequenzumsetzer eine elektro-optische Vorrichtung ist.

**4.** Vorrichtung zur Verstärkung des Modulationsgrads nach Anspruch 2, dadurch gekennzeichnet, daß der Frequenzumsetzer ein akusto-optischer Deflektor ist.

**5.** Vorrichtung zur Verstärkung des Modulationsgrads einer ankommenden monochromatischen Lichtwelle der Frequenz FL, wobei die Vorrichtung einen optischen Verstärker AO besitzt sowie zwischen dem Eingang für die ankommende Welle und dem Verstärker eine interferometrische Vorrichtung mit zwei Armen $B_1$ und $B_2$ aufweist, die je einen Teil der ankommenden Welle empfangen und von denen der eine auch durch eine elektrische Vorrichtung gespeist wird, die eine Hyperfrequenzwelle der Frequenz FM in diesem Arm erzeugen kann,

- wobei diese interferometrische Vorrichtung Mittel zur Erzeugung zweier Lichtwellen gleicher Amplitude, aber unterschiedlicher Frequenzen am Ausgang der beiden Arme besitzt, dadurch gekennzeichnet, daß der Arm $B_1$ einen festen Phasenschieber um den Wert $\pi$ und der Arm $B_2$ einen Phasenschieber enthält, der mit einem Hyperfrequenzsignal gespeist wird.

6. Vorrichtung zur Verstärkung des Modulationsgrads einer ankommenden monochromatischen Lichtwelle der Frequenz FL, wobei die Vorrichtung einen optischen Verstärker AO besitzt sowie zwischen dem Eingang für die ankommende Welle und dem Verstärker eine interferometrische Vorrichtung mit zwei Armen $B_1$ und $B_2$ aufweist, die je einen Teil der ankommenden Welle empfangen und von denen der eine auch durch eine elektrische Vorrichtung gespeist wird, die eine Hyperfrequenzwelle der Frequenz FM in diesem Arm erzeugen kann,

- wobei diese interferometrische Vorrichtung Mittel zur Erzeugung zweier Lichtwellen gleicher Amplitude, aber unterschiedlicher Frequenzen am Ausgang der beiden Arme besitzt, dadurch gekennzeichnet, daß die interferometrische Vorrichtung ein Mikrointerferometer nach Sagnac mit einem Phasenschieber $D_{2\phi}$ ist, der mit einem Hyperfrequenzsignal gespeist wird.

FIG.1

EP 0 702 804 B1

FIG.2

EP 0 702 804 B1

FIG.3